# EUROPÄISCHE PATENTANMELDUNG

(11) **EP 1 182 170 A1**
(43) Veröffentlichungstag der Anmeldung: **27.02.2002**
(21) Anmeldenummer: 00117976.1
(22) Anmeldetag: 22.08.2000
(51) Int. Cl.: C02F 1/04, F03D 9/00

(54) **Wasseraufbereitung mittels Wasserverdampfungsanlagen, die in den Türmen von Windkraftanlagen eingebaut oder an diese Türme angebaut werden**

(71) Anmelder: Reichen, Werner, Dr., 20354 Hamburg (DE)
(72) Erfinder: Hofmann, Peter, 17440 Kröslin (DE); Reichen, Werner, Dr., 20354 Hamburg (DE)

(57) **Zusammenfassung**

Die Windkraftanlage, in die eine Wasseraufbereitungsanlage in Form eines Oberflächensiedewasserverdampfers integriert oder mit einer solchen umbaut wird, kann zur Erzeugung von Strom, Trinkwasser und Heizungswärme verwendet werden. Die Oberflächensiedewasserverdampfungsanlage ist so konzipiert, dass sie in den Masten der Windkraftanlage eingebaut oder als "Shuttle" an bestehende Windkraftanlagen angebaut werden kann. Kleine Anlagen sind so konzipiert, dass sie mobil sind und am Bedarfsort aufgebaut werden können.

## Beschreibung

Die Erfindung betrifft eine die Integration einer Wasseraufbereitungsanlage in eine Windkraftanlage.

Windkraftanlagen haben in der vergangenen Dekade einen enormen Boom erlebt, der auch weiterhin anhalten wird, nicht nur weil Wind kostenlos zur Verfügung steht, sondern auch weil die Energieerzeugung durch Nutzung der Naturkraft "Wind" zur saubersten überhaupt gehört. Die Umsetzung von Windkraft in elektrische Energie gehört heute verschiedenenorts zum Standard und mit der Weiterentwicklung der Generatoren wird auch der Wirkungsgrad laufend verbessert.

Die Problematik bei dieser Art von Energieerzeugung liegt darin, dass sie erstens von den zeitlichen und lokalen Windverhältnissen abhängig ist und, zweitens, die Energie dann auch direkt verwendet werden muss, es sei denn sie könne in ein Netz eingespiesen werden, aus welchem in Spitzenzeiten oder bei Windstille Energie auch wieder bezogen werden kann. Ist kein Netz lokal vorhanden, wird gewissermassen Energie nicht ausgenützt, bzw. geht "verloren".

Hinzu kommt, dass der Hohlraum in den Masten der Windkraftanlagen in der Regel in seiner ganzen Höhe nicht ausgenützt wird.

Hinzu kommt, dass es in verschiedenen Regionen der Erde mit steigender Tendenz an Trinkwasser mangelt und einer der Gründe ist, dass die notwendige Energie für die Wasseraufbereitung fehlt.

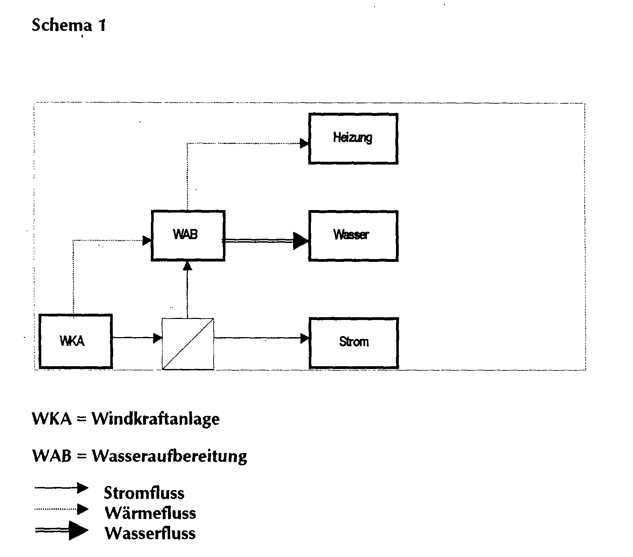

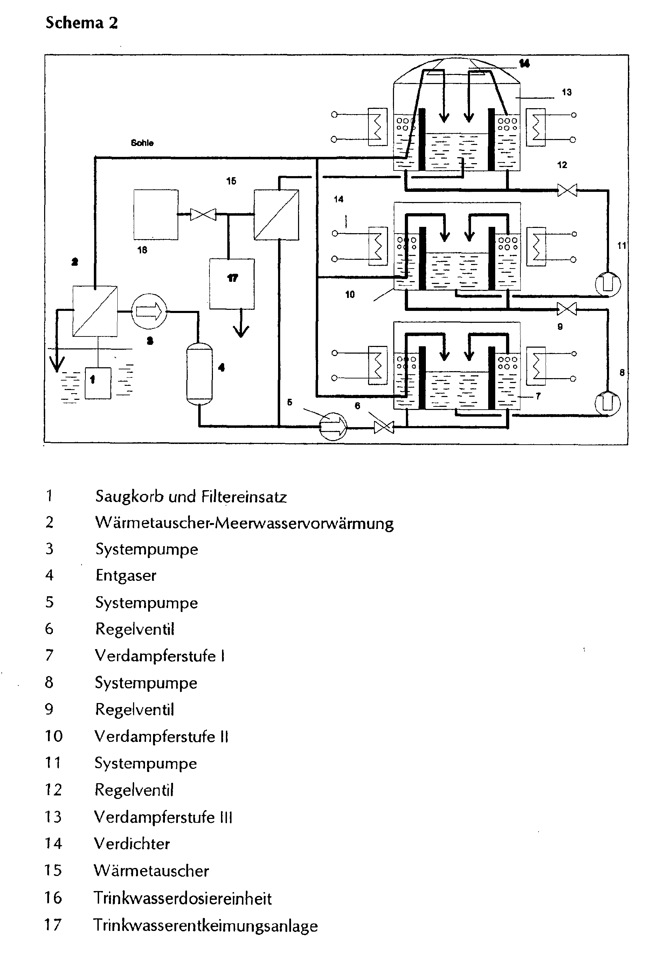

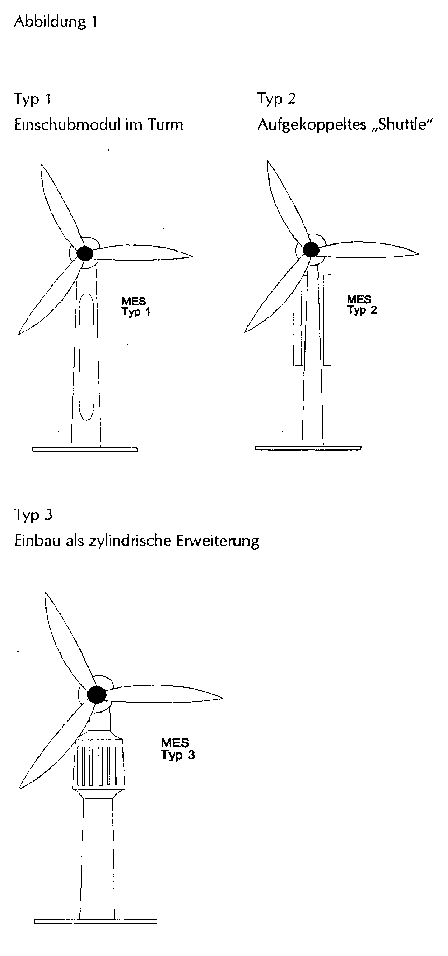

Die Erfindung besteht darin eine Wasseraufbereitungsanlage in die Windkraftanlage einzubauen. Dazu kann Salzwasser und/oder Abwasser durch den Ein- oder Aufbau einer Oberflächensiedewasserverdampfungsanlage (Schema 2) integriert in (Typ 1, Abbildung 1) oder aufgebaut um den Turm (Typ 2, Abbildung 1), bzw. mittels einer Turmerweiterung (Typ 3, Abbildung 1) an Ort und Stelle verwendet werden.

Die Nutzung der Windkraftanlage als statische Aufnahme einer Wasseraufberei-Wasseraufbereitungsanlage führt zudem zu einer enormen Kostensenkung im Anlagenbau.

Die betriebsbedingt enstehende Generatorwärme kann dabei für die Erwärmung des Wassers verwendet werden; das gleiche gilt für die Energie, die bei den Kondensationsprozessen frei wird, wobei diese alternativ auch zu Heizzwecken verwendet werden kann.

Die vorteilhafte Wirkung der Erfindung besteht darin, dass in energieverbrauchsarmen Zeiten die Windkraftanlage nicht einfach stillsteht, sondern dass die entstehende Energie optimal genutzt werden kann.

Die Erfindung besteht ferner darin, dass solche Anlagen verwendet werden können zur Trink- und Abwasseraufbereitung und zu Heizzwecken (Schema 1). Sie eignen sich daher auch als Energie- und Wasserversorger von abgelegenen Touristikzentren und/oder Agglomerationen.

Idealerweise sollen kleinere Anlagen als "mobile Einheiten" konstruiert werden, z.B. auf Lastern oder Anhängern, so dass sie in einfacher Weise an den Einsatzort transportiert und dort errichtet werden können (z.B. zum Betrieb von Feldlazaretten der Armee, zu entlegenen Baustellen, etc.).

## Patentansprüche

1. Die Herstellung und Verwendung von Aufbereitungsanlagen von Wasser aller Herkünfte mittels Oberflächensiedewasserverdampfer, die in oder um die Türme von Windkraftanlagen integriert oder angebaut sind.

2. Die Ausrüstung bestehender Windkraftanlagen mit Oberflächensiedewasserverdampfer zur Wasseraufbereitung von Wasser aller Herkünfte.

3. Die Herstellung und Verwendung von Windkraftanlagen kombiniert mit einer Wasseraufbereitungsanlage, die mobil, fahrbar und an Ort und Stelle aufrichtbar sind.

4. Die Erzeugung von Strom und Heizwärme mit Anlagen gemäss der Ansprüche 1 - 3.
